(19) **Europäisches Patentamt European Patent Office Office européen des brevets**

(11) **EP 2 265 764 B1**

(12) **EUROPEAN PATENT SPECIFICATION**

(45) Date of publication and mention of the grant of the patent:
**01.07.2015 Bulletin 2015/27**

(21) Application number: **09725755.4**

(22) Date of filing: **26.03.2009**

(51) Int Cl.:
**E01C 13/08** (2006.01)  **B29B 9/06** (2006.01)
**B29B 9/12** (2006.01)

(86) International application number:
**PCT/EP2009/053613**

(87) International publication number:
**WO 2009/118388 (01.10.2009 Gazette 2009/40)**

(54) **Artificial turf structure**

Kunstrasenstruktur

Structure de gazon artificiel

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **27.03.2008 EP 08102977**

(43) Date of publication of application:
**29.12.2010 Bulletin 2010/52**

(73) Proprietor: **So.F.teR. S.p.A.**
**47122 Forli' (FC) (IT)**

(72) Inventors:
• **DOZEMAN, Albertus Otto**
  **NL-6121NK Born (NL)**
• **JOLY, Gert Johan**
  **B-3018 Wijgmaal (BE)**
• **WIJERS, Bart Gerardus Christiaan Johannes**
  **NL-6181MJ Elsloo (NL)**

(74) Representative: **Modiano, Micaela Nadia et al**
**Modiano & Partners (IT)**
**Via Meravigli, 16**
**20123 Milano (IT)**

(56) References cited:
| | |
|---|---|
| **EP-A2- 0 644 296** | **EP-A2- 2 119 829** |
| **EP-A2- 2 119 830** | **WO-A-2006/092337** |
| **US-A1- 2002 064 628** | **US-A1- 2005 042 394** |
| **US-A1- 2005 124 730** | |

**Description**

The present invention relates to artificial turf structures.

Artificial turf structures are well known in the art. Such a structure comprises a backing layer with an upper surface provided with fibres of a selected length, the fibres extending upwardly from the upper surface and an infill layer of polymer granules disposed between the fibres. The backing layer may consist of a sheet of plastic material such as, for example, a non-woven fabric. Extending upwardly from the upper surface of the backing layer a large number of upstanding fibres are present. These fibres are fixed in the backing layer with for instance latex or polyurethane. To support the shock absorption and vertical deformation a so called shock pad or E-layer is often applied below the backing layer.

Many sports, such as field hockey, tennis, American football etc are now played on artificial turf sports fields, which fields are made up of an artificial turf structure as referred to above. Although sporters sustain fewer injuries on the natural turf sports field when falling or making a sliding tackle, on account of the softer surface thereof, such sports fields are often severely damaged when the above sports are played thereon, precisely because they are used intensively and because of the varying influence of the weather conditions. Artificial turf sports fields, on the other hand, require less maintenance and can be played on much more intensively than the natural turf sports fields. To give the artificial turf sports fields playing characteristics that resemble those of natural turf as much as possible, polymer granules are spread between the artificial turf fibers. These polymer granules not only provide a softer, shock-absorbing playing surface on which players are less prone to injury, but they also provide improved playing characteristics.

Over the last years artificial turf structures, for example artificial soccer fields, have been improved using new developments in infill materials, new fiber technology, new tuft technology and improved total system installations. However still a lot of disadvantages exists in reaching the desired level of properties such as shock absorption, energy restitution, vertical ball rebound and keeping these properties consistent in time. The combination of these properties is still not sufficient to provide an artificial turf structure with the performance of top natural turf when it's in an optimal condition.

Polymer granules suitable as infill material for artificial turf structures are known in the art. In WO-A-2006092337 for example an infill polymer granulate is disclosed having a cylindrical shape with a length/diameter (l/D) ratio between 0.8-1.2 and having a substantial uniform particle size. It was found that the size and shape of the infill polymer granules significantly affect the turf performance characteristics.

The use of polymer granules as infill material in artificial turf structures however has a number of drawbacks. Not only the construction of such an artificial turf structure is more labor-intensive than the construction of a natural turf sports field, but an artificial turf structure provided with polymer granules as infill requires subsequent maintenance as well. The initially uniform distribution of the granular infill can be disturbed by intensive usage. As a result, areas containing hardly any infill may form in particular in places where the field is played on very intensively, for example in the goal area, which has an adverse effect on the quality of play, but which above all leads to an increased risk of injury. The distribution and the amount of the polymer granules must be verified at regular intervals and repairs must be carried out, if necessary.

Furthermore it has become apparent that the weather influences may affect the properties of the polymer granules with the passage of time, which has a negative effect on the quality of the granular infill and thus on the playing characteristics of the artificial turf structure. A negative factor, for example, is the strong compaction of polymer granules as a result of which the artificial turf structure will increasingly harden during play, with an increased risk of injury. Furthermore, the polymer granules may change (harden or become brittle) under the influence of the weather conditions (sunlight, for example).

Foamed polymer granules which include open cell foams and closed cell foams have also been used as infill material in artificial turf structures, see for example US 2002/0064628 A1. A disadvantage of foamed polymer granules is a too low abrasion resistance. Closed cell foams have too high elasticity due to the pneumatic effect of air present enclosed chambers. Open cell foams have the disadvantage of taking up water which creates an environment for unwanted bacteria growth. Moreover these open cell foams containing moisture will suffer from mechanical degradation when the temperature drops below the freezing point of water.

A further disadvantage is that a high amount of polymer granules is needed to provide an infill layer with respectable performance characteristics. This high amount of polymer granules results in high costs and a high demand of polymeric materials.

The object of the present invention is to provided an artificial turf structure with a polymer granulate as infill material which overcomes the above mentioned disadvantages.

A further object of the present invention is to provide artificial turf structures which offer excellent performance characteristics while using a lower amount (kg) of polymer granules per surface area (m2) as infill material.

A still further object of the present invention is to provide an artificial turf structure which can effectively prevent increase in temperature on an artificial turf surface due to direct sunlight in the summer season. Moreover the present invention is to provide an artificial turf structure which exhibit an excellent performance and curability.

The objects of the present invention are achieved by an artificial turf structure according to claim 1.

Surprisingly polymer granules have been found suitable as infill material for artificial turf structures with a specified particle shape that reproduce as faithfully as possible the characteristics of a natural turf structure as applied for (for example) football or rugby. Even on the long term these characteristics are still fulfilling the FIFA requirements on sports functionality. Moreover the tubular the hollow polymer granules can gather water in the inside of the granule (from for example rain or artificial moisturing the field), which water can evaporate during playing or under the influence of sun. When water evaporates, the artificial turf structure will cool down, in contrast to known artificial turf structures that become very hot under sunny conditions.

It has been found that hollow polymer granules provide an improved shock absorption which is a key parameter in artificial turf structures. Moreover it has surprisingly been found that the shock absorption stays at a high level using less weight of the hollow polymer granules as infill material in artificial turf structures. The use of less weight of infill material directly results in lower costs and a more environmental friendly solution. Another advantage of the present invention is that the specific shape of the polymer granules shows a lower rotational resistance and therefore excellent behavior in an artificial turf structure. A still further advantage of the hollow polymer granules is that when used in an artificial turf structure no other infill or shock-absorbing layer such as an e-layer or lava-rubber mixture is necessarily required as a sub-base. The hollow polymer granules moreover provide an improved abrasion resistance and a better drainage when used as infill material in an artificial turf structure.

The polymer granules of the artificial turf structure according to the present invention have one or more hollow channels, which preferably have one, more preferably two openings. The hollow channel occupies at least 10% of the volume of a polymer granule. This is in contrast to hollow spaces which are present in foamed granules, which foamed hollow spaces are very small, typically less then 0.3% of the volume of a granule. Preferably the hollow space of a granule of the present invention comprises at least 20%, more preferably at least 30%, 40% or 45% or 50% of the volume of a polymer granule.

The polymer granules of the artificial turf structure according to the present invention comprise preferably a hollow volume in % of the total volume per granule of at least 20%, preferably at least 30% or 40 %, most preferably at least 45% or 50%. Preferably the polymer granules comprise a hollow volume in % of the total volume per granule of less then 85% to have sufficient mechanical strength. More preferably the polymer granules comprise a hollow volume in % of the total volume per granule of less then 75 %.

Brief description of the figures:

Figure 1: hollow polymer granule, having a length L, an outer diameter d1 and an inner diameter d2.

Figure 2: Model artificial turf structure for determination of the shock absorption index, comprising a carpet backing (3) having 45 mm Evolution® monofilament fibers (1), which are filled with 20 mm of infill polymeric hollow granules (2).

Figure 3: Artificial turf structure having an elayer of a foamed material e.g. crosslinked polyolefine or polyurethane (4), a carpet backing (3) having monofilament fibres (1), sand (5) and infill polymeric hollow granules (2).

Figure 4: Artificial turf structure having an elayer of hollow granules bound with a polyurethane bender (6), a carpet backing (3) having monofilament fibres (1), sand (5) and infill layer of hollow granules (2).

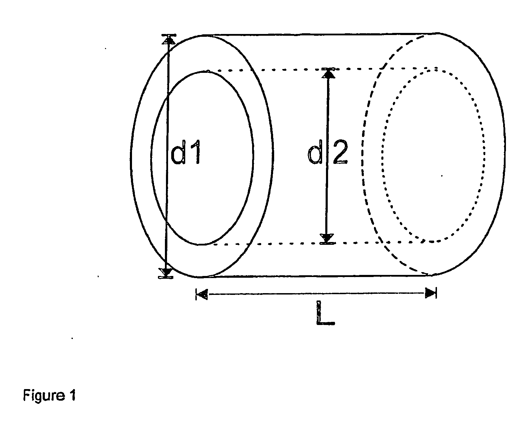

The hollow polymer granules of the present invention have a tubular shape as shown in figure 1. By a tubular shape is meant a shape in the form of a tube or pipe-like having a hollow channel. The tubular granules have one or more hollow channels. Preferably the tubular granules have one hollow channel. The hollow polymer granules may have an irregular, rectangular, elliptic or cylindrical form at the outside. Preferably the granules have a cylindrical form at the outside and inside of the granule.

The tubular shaped particles have a length L, which runs parallel to the hollow channel. The particles also have a diameter which runs perpendicular to the hollow channel. In case the granules are irregular, the maximum width of a section of a granule is preferably between 2 and 6 mm, or most preferably between 2 and 5 mm.

The granules have an outer diameter (d1) and an inner diameter (d2) as shown in figure 1. The ratio between d2 and d1 (ratio = d2/d1) is for example between 0.1-0.9. Preferably the ratio (d2)/(d1) is between 0.20-0.8. More preferably the ratio (d2)/(d1) is between 0.40-0.75. The polymer granules according to the present invention preferably have an outer diameter (d1) which is between 1 and 10 mm, preferably between 1,5 and 5 mm, more preferably between 2 and 4 mm. When the polymer granules are used as infill material, the size is preferably between 2 and 4 mm, or most preferably between 2 and 3,5 mm. It has been found that a particle diameter (d1) between 2 and 3.5 mm provides the advantage of less migration of the infill particles in the artificial turf structure. Less migration leads to a higher stability and a longer life time of the structure.

The inner diameter (d2) is preferably less than 3.5 mm, 3 mm, and more preferably less then 2.5 mm. The inner diameter (d2) is preferably at least 0,5 mm, more preferably at least 1.5 mm.

In case the polymer granules do not have a perfect tubular shape (like shown in figure 1), the outer and inner diameter may differ depending on the exact position where the measurement of the diameter is being made on the cross section of the granule. In such a case, the outer diameter (d1) is the maximum outer diameter that can be measured on the cross section of the granule, and the inner diameter (d2) is the maximum inner diameter that can be measured on the cross section of the granule.

The polymer granules have a relative large wall thickness (which can be defined as ½ x (d1-d2)). The wall thickness is at least 200 $\mu$m, preferably at least 300 $\mu$m even more preferably at least 400 $\mu$m. This large wall thickness is believed to have an important effect on the stability of the granules and lifetime of the artificial turf structure.

The polymer granules when used as an infill material have a length/ outer size diameter (L/d1) ratio >=0.5. Preferably the (L/d1) ratio >= 0.7 and more preferably the (L/d1)ratio is at least 0.9. Preferably the (L/d1)ratio is =< 2.0 and more preferably =< 1,5 This ratio leads to a stable performance during time.

Polymer granules having a (L/d1) ratio's above 4 may be less desirable for use as infill material: they may lead to more open structures directly after installation, which may lead to strong migration of the granules, resulting in an inconsistent infill layer and, as a result, inconsistent playing characteristics.

The polymer granules when used as an e-layer have preferably a length/ outer size diameter (L/d1) ratio >=0.5. For this application, there is not a limited upper level. L/d1 ratio may exceed 1000 when used as e-layer material.

The added value of the shape of the granules is further supported by experiments in which an infill layer of the hollow polymer granules may be installed without e-layer.

The polymer granules are for example manufactured of plastomers, thermoplastic elastomers such as vinyl based polymers or polyolefin based polymers or dynamically vulcanised thermoplastic elastomers. Preferably the granules are manufactured from a thermoplastic elastomer, a plastomer or mixtures thereof.

Examples of plastomers are ethylene/alpha-olefin copolymers with a density of less than about 0.93 g/cm$^3$ at a molecular weight (Mw) greater than about 20.000. Examples of ethylene/alpha-olefin copolymers include ethylene/1-butene, ethylene/1-pentene, ethylene/1-hexene, ethylene/1-octene, and ethylene/2-norbornene. Commercially available copolymers are for example EXACT™ or ENGAGE™ Other examples of plastomers are polyolefin block copolymers with alternating blocks of hard and soft segments, commercially available under the trade name INFUSE™.

Examples of vinyl-based polymers are ethylene vinyl acetate (EVA), block copolymers or terpolymers having one or two terminal polymeric blocks of for example polystyrene or poly(alpha-methylstyrene), and at least one non-terminal block of an elastomeric polymer, for example polybutadiene or polyisoprene. Typical examples of such block copolymers are those of general form polystyrene-polybutadiene-polystyrene (SBS), polystyrene-polyisoprene-polystyrene (SIS), poly(alpha-methylstyrene)-polybutadiene-poly(alpha-methylstyrene) or hydrogenated versions of those, such as polystyrene-poly(ethylene/butylenes)-polystyrene (SEBS), polystyrene-ethylene-propylene-polystyrene (SEPS), polystyrene-poly(ethylene/propylene) (SEP), polystyrene-poly(ethylene/ethylene/propylene)-polystyrene (SEEPS). These styrene block copolymers are commercially available from Kraton Polymers LLC under the trademark KRATON and from Kuraray Co., Ltd under the trade name Septon. Other suitable materials include crosslinkable styrenic block copolymers produced by Kuraray Co., Ltd under the trade name Septon V and styrene-polyisobutylene-polystyrene produced by Kaneka under the trade name Sibstar. Preferably polystyrene-poly(ethylene/butylene)-polystyrene (SEBS) or polystyrene-polybutadiene-polystyrene (SBS) is used as vinyl-based polymer.

Examples of polyolefin-based polymers are polyethylene, polypropylene or metallocene polymerised polyolefines, ethylene-propylene copolymers, hereinafter called EP, propylene-ethylene copolymers for example known as VISTAMAXX™ or VERSIFY™ or ethylene-propylene-diene terpolymers, hereinafter called EPDM.

Examples of other thermoplastic elastomers are polyurethanes, polyetheresters or polymers comprising a thermoplastic and an elastomer. The thermoplastic may be chosen from polyethylene or polypropylene homo-or copolymers and polyisobutylene. The elastomer may be chosen from ethylene-propylene copolymers, hereinafter called EPM, ethylene-propylene-diene terpolymers, hereinafter called EPDM, natural rubbers, styrene-butadiene rubber (SBR), nitrile-butadiene rubbers (NBR), polyisoprene, butyl rubber or halogenated butyl rubber.

Preferably the polymer granules according to the invention comprise a thermoplastic elastomer from vinyl based polymers, polyurethanes, polyetheresters or polymers comprising a thermoplastic and an elastomer.

The elastomer may be dynamically vulcanised by the use of a cross linking agent such as sulphur, sulphurous compounds, metal oxides, maleimides, siloxane compounds for example hydrosilane or vinylalkoxysilane, phenol resins or peroxides. In case of dynamic vulcanisation the thermoplastic and the elastomer are subjected to kneading or to other shear forces in the presence of the cross linking agent at temperatures between for example 140 and 300° C until the elastomer is at least partially vulcanised.

Most preferably the polymer granules comprise a dynamically vulcanised thermoplastic elastomer. Dynamically vulcanised thermoplastic elastomers are commercially known as for example SARLINK™ available from DSM Elastomers.

The polymer compound used to make the polymer granules according to the present invention preferably have a shore A hardness between 20-93. More preferably a Shore A hardness between 40-85. Still more preferably a Shore A hardness between 50 and 80. The compression set of the polymer compound is preferably below 55% measured in accordance with ISO 815, at 20°C/72h.

In a most preferred embodiment of the present invention the polymer granules of the present invention are tubular shaped, having a d1 between 2 and 5 mm, a d2 between 1 and 2,5 mm, a wall thickness of at least 300 $\mu$m and a L/d1 ratio between 0.7 and 2, and the polymer granules are prepared from a polymer compound which is dynamically vulcanized thermoplastic elastomer.

Depending on the polymers used for the manufacturing of the granules, the granules according to the present invention may also comprise for example reinforcing and non-reinforcing fillers, plasticizers, antioxidants, UV-stabilizers, antistatic agents, waxes, foaming agents, lubricants or flame retardants as described in for example the Rubber World Magazine Blue Book. The granulate may include a suitable pigment and can be provided in any colour. Preferred is a lighter colour for example a brown, green, or beige colour because if a lighter colour is used sun light is more reflected which results in a lower temperature of the pitch.

Examples of fillers are clay, talc, CaCO3. Examples of plasticizers are aromatic, naphtenic or paraffinic oil, preferably oil with a low aromatic and sulphur content. An example of an UV stabiliser is a HALS compound.

The polymer granules may be prepared by mixing one or more polymers in an extruder with optionally additives, fillers, curing agents and the like, forming a polymer melt and micro granulating of the extruded melt through a die plate with a diameter of holes in the range of 0.8 to 10 mm. For example the micro granulation can be conducted with commercial available underwater pelletizers, hot plate pelletizing or by strand cutting. Preferred is to manufacture the granules by hot plate pelletizing or by strand cutting.

The invention further relates to artificial turf structures such as soccer fields, hockey fields, rugby fields, tennis fields, fields for recreation and playing area's or fields for athletics tracks where the infill material brings unique high performance in combination with low applied weight per m$^2$.

The tubular polymer granules provide a packed structure which is reached directly after installation of the infill layer and which is stable during the service life of the artificial turf. However, the granules are loose enough to move under influence of a force. This results in a constant open structure of the infill layer, which is responsible for the natural turf character. In the top layer of the infill, the granules are still free to move, which means that the studs of the player shoes can penetrate into the turf structure, even after years. This is a very important advantage, because it contributes to the grip of the football shoe and therefore provides a natural turf feeling.

The artificial turf structure of the present invention comprises a backing layer with an upper surface provided with fibres of a selected length, the fibres extending upwardly from the upper surface and an infill layer of the polymer granules according to the present invention disposed between the fibres. The backing layer may consist of a sheet of plastic material such as, for example, a non-woven fabric. Extending upwardly from the upper surface of the backing layer a large number of upstanding fibres are present. These fibres are fixed in the backing layer with for instance latex or polyurethane. The length of the fibres is selected depending upon the depth of the infill material and the desired resilience of the completed artificial turf structure. The depth of the infill layer is less than the length of the fibres. The length of the fibres is for example up to 65 mm. A shock pad or e-layer may be applied to support in the value of shock absorption and vertical deformation, the amount of infill material can than be decreased and preferably the length of the fibres is below 45 mm.

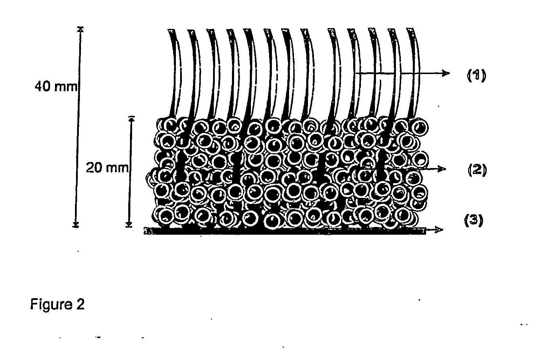

The artificial turf structure shows to have an improved shock absorbance, relative to the amount of infill material applied (kg infill per m2 of turf structure). In order to quantify the shock absorbance, a shock absorption index is hereby introduced. The shock absorption index is measure to a model system, comprising a concrete flooring, a carpet backing having 45 mm evolution® monofilament fibers, which are filled with 20 mm of infill polymer granules (See figure 2). In this model system, no infill sand is applied. The shock absorbance is measured on this model system according to FIFA test method 04 (from FIFA Quality Concept- Handbook of test methods for Football Turf, edition Jan 30, 2008 available at http://www.fifa.com/mm/document/afdeveloping/pitchequip/fqc_test_method_manual_jan_2008_36019.pdf) with the aid of an Artificial Athlete (brand: Labosport).

The calculation of this index is based on the ratio of the shock absorption measured on an artificial turf structure and the weight of infill which is needed to fill the applied height in m$^2$.

$$\text{shock absorption index} = \frac{\text{measured shock absorption (\%)}}{\text{applied kg's infill per m}^2}$$

The higher the value of the shock absorption index, the better the infill material is performing. Unexpectedly it has been found that shock absorption index values above 6 can be reached when the hollow particles of the present invention are applied as infill material.

It has surprisingly been found that the shock absorption index can be even higher, when thermoplastic vulcanized materials are used as infill material. In that case, values for the shock absorption index can be reached of at least 8, or even 10. The shock absorption index will generally be below 100, or 50.

The fibres are preferably synthetic fibres composed of polyethylene, polypropylene or nylon. The fibres are for example monofilament fibres or fibrillated fibres but also a mixture of fibrillated fibres and monofilament fibres may be used. The thickness of the fibres may vary. However also a mix of thick and thin fibres is possible, the same counts for different types of fibres. This causes a ball to roll in a more predictable manner depending on the resistance of the fibres to the ball during play. However the general criteria for making the backing sheet and the fibres are known in the art, and hence do not require a detailed description.

The thickness of the infill layer comprising the polymer granules according to the present invention is for example between 5-25 mm, preferably between 10- 20 mm. Not necessary but possible a layer of sand may be used having a thickness up to 15 mm, preferably between 0 and 10 mm.

During its lifecycle the artificial turf structure must stand extremely high forces and pressures. As the infill material takes care of the most of these forces, it must be of enough strength to prevent permanent deformation and/or "melting" of the granules together. Therefore it must fulfil the ISA Sport requirements towards resistance to continuous load; MN/V1.3. Here the deformation of the granules during load must be higher than 50%. After releasing the pressure the residual deformation must not exceed 25%.

Because most of the artificial turf structures are in direct contact with raining water and the ground, all materials or components, which are applied for the construction of an artificial turf structure, must be absolute safe towards the environment and health. Therefore the artificial turf industry has a big responsibility to use or apply only materials which contain no hazardous ingredients or, at least, no hazardous materials are leaching during time. Only this way, problems of pollution of ground, ground water of surface water can be avoided.

The FIFA has issued the FIFA Artificial turf regulations, which describe test methods for assessing an artificial turf structure or the infill material for artificial turf structures. The test methods are limited to those that are relevant for football and for example include shock absorption of the surface, vertical deformation of the surface under load, rotational resistance, ball rebound and ball roll. FIFA's accredited test institutes are published on www.fifa.com.

Shock absorption is a measure for the shock absorbency of a field. The force reduction can be measured in accordance with the Football-Related Technical Requirements of the FIFA and standard EN 15330-1, by dropping a falling weight of 20 kg with a hard striking surface on a concrete surface and on a test piece of an artificial turf surface, whereby the forces measured between the ball and the concrete ($F_{max\,(concrete)}$), respectively the artificial turf surface ($F_{max(testpiece)}$) are measured. The Force reduction is then calculated from the expression:

$$FR= (1- F_{max(testpiece)}/ F_{max\,(concrete)}) \times 100\%$$

The test method is referred to in the FIFA test manual and the specification is between 55 and 70%, where higher values are more ideal.

Vertical deformation is determined by allowing a mass to fall onto a spring that rests, via a load cell and test food, on to a test specimen and the deformation of the surface under standard force is measured. The test method is referred to in the FIFA test manual and standard EN 15330-1 and the specification is between 4 and 9 mm. The vertical deformation of the artificial turf according to the present invention is found to be between 4-9 mm.

Rotational friction is determined by measuring the torque that is required to rotate a loaded studded disk in contact with the top surface of the specimen. The test method is referred to in the FIFA test manual and standard EN 15330-1 and the specification is 25-50 Nm. The rotational friction of the artificial turf structure according to the present invention is found to be between 30-45 Nm.

The invention will be illustrated by the following examples without being restricted thereto.

Materials and test methods

All tests are described in the FIFA Quality concept for football turf-Handbook of test methods, January 2008 edition or standard EN 15330-1.

The EN 15330-1 specifies performance and durability characteristics of synthetic turf sports surfaces. The standard has a comprehensive range of ball/surface requirements including ball rebound, ball roll and angle ball rebound. The standard also has requirements for the effects of resistance to artificial weathering, joint strength and simulated use; all of which are designed to help ensure that only surfaces of an acceptable quality are installed.

To ensure the surfaces will provide safe playing environments, limits for shock absorption, surface stability (described as vertical deformation) and surface friction (described as rotational resistance) are specified by the FIFA in the FIFA Quality concept for football turf - Handbook of requirements, January 2008 edition:

- Simulated mechanical abrasion during use according FIFA test method 9.
- All materials were tested on there UV stability according FIFA Test Method 10 using an UV-tester 4896 $\pm$ 125) MJ/m2 (appr. 3000 hrs).
- All materials tested Grey, Scale>=3.
- Granule deformation and residual deformation according ISA Sport test method MN/V1.3.

For testing the properties of the granules of the invention, 5 different granules have been prepared.
Granules A are solid granules from Terra XPS® 100101, a thermoplastic elastomer available from Terra Sports Technology.
Granules A-F are foamed granules made from Terra XPS® 100101
Granules A-H are hollow granules from Terra XPS®-03
Granules B-H are hollow granules made from a compound comprising 39 parts Exact 2M124, 46 parts $CaCO_3$ and 15 parts oil.
Granules C-H are hollow granules made from Sarlink 3160N

Hollow granules have been produced on a ZSK-30 single-screw extruder equipped with a single small tube die having an insert in the centre. Air can be injected at the insert in the die, to provide a hollow granule. Different tubes have been produced from Sarlink 3160N, the compound containing Exact 2M124, and from Terra XPS 100101, allowed to cool down in a water bath and subsequently granulated with a pelletiser to a length L of approximately 3 mm. The extruder temperature has been 80°C at entrance, rest of the extruder is at around 200°C, while the Die temperature has been 210°C. The extruder speed has been 150 rpm with throughput 3-5 kg/h; Torque 20-25%; Correct dimensions are achieved by a combination of take off speed, die swell, throughput, cooling length and air quantity used.
These materials are characterized by the properties as set in table 1.

Table 1 summary of granules

|  | A | A-F | A-H | B-H | C-H |
|---|---|---|---|---|---|
| $\varnothing_{outside}$ (mm) | 2.1 | 2.2 | 4.3 | 3.1 | 4.7 |
| $\varnothing_{inside}$ (mm) | - | - | 2.1 | 1.6 | 3.5 |
| Hollow volume in % of total volume per granule | 0% | 25% | 24% | 28% | 55% |
| Bulk density (kg/ldm$^3$) | 0.82 | 0.57 | 0.48 | 0.51 | 0.29 |

Example 1

The above materials were tested according to the requirements of FIFA Quality concept for football turf, edition January 2008 and EN 15330-1. All materials passed the UV test: UV-tester 4896 $\pm$ 125) MJ/m2 (approx. 3000 hrs). Test results on granule deformation (according ISA Sport MN/V1.3) and mechanical abrasion (according FIFA Test method: Simulated Mechanical Abrasion During Use, FIFA test method 9, page 37, Edition January 2008) are given in table 2.

| Table 2 | A | A-F | A-H | B-H | C-H |
|---|---|---|---|---|---|
| Deformation during2N/mm$^2$, ISA Sport test MN/V1.3 | >= 50% (p) | >= 50% (p) | >= 50% (p) | >= 50% (p) | >= 50% (p) |
| Residual compression | <= 25% (p) | >=25% (np) | 25% (p) | >=25% (np) | <= 25% (p) |
| Compaction of infill granules* after simulated mechanical abrasion of the system | none | none | none | none | none |
| Formation of dust* | little | very strong | very little | none | none |

(continued)

| Table 2 | A | A-F | A-H | B-H | C-H |
|---|---|---|---|---|---|
| Change of sport technical performance* | none | little | none | none | none |

Table 2
-(p) means "pass" of MN/V1.3 requirement of ≥ 50% deformation during load or MN/V1.3 requirement of <= 25% residual deformation after release of pressure
-(np) means "no pass" of MN/V1.3 requirement of ≥ 50% deformation during load or MN/V1.3 requirement of <= 25% residual % deformation after release of pressure
* = after simulated mechanical abrasion of the system, FIFA test method 9, page 37 Edition January 2008)

Example 1 shows that the foamed material A-F is too weak in durability test and shows a too high residual compression. Granule C-H (the thermoplastic dynamically vulcanized elastomer) performs best of all tested granules.

Example 2

Characteristics of a benchmark artificial turf structure without shock pad or sand infill

To compare the intrinsic contribution of all granules, an artificial turf structure has been used which does not comprise a shock pad or sand infill (see figure 2). Therefore, the shock absorbing performance of these systems is a result of the applied infill only. Nevertheless the interaction with the fiber is important, and therefore each time the type and length of the turf/fibers are consistent.
The total system was installed on concrete flooring so that the sport technical function only came from the elastomeric infill. The shock absorption (requirements: FIFA* : 55-70% ; FIFA** : 60-70%), vertical deformation (requirements FIFA* : 4-9 mm ; FIFA** : 4-8 mm) and energy restitution (KNVB (Dutch Soccer Association) requirement: 20 - 50%) were tested. Results are given in table 3.

Table 3; benchmark artificial turf structure

| | A | A-F | A-H | B-H | C-H |
|---|---|---|---|---|---|
| Amount of granules used to reach **20** mm infill layer (kg/m2) | 16.2 | 11.4 | 9.6 | 10.2 | 5.7 |
| Shock absorption | 52% | 53% | 61% | 62% | 62% |
| Shock absorption index (%/(kg/m$^2$)) | 3.5 | 4.7 | 6.4 | 6.1 | 10.9 |
| Vertical deformation (mm) | 4.1 | 6.2 | 9.4 | 7.3 | 8.1 |
| Vertical deformation (%) | 47 | 41 | 41 | 41 | 42 |

Example 3

Characteristics of an artificial turf structure with shock adsorbing e-layer

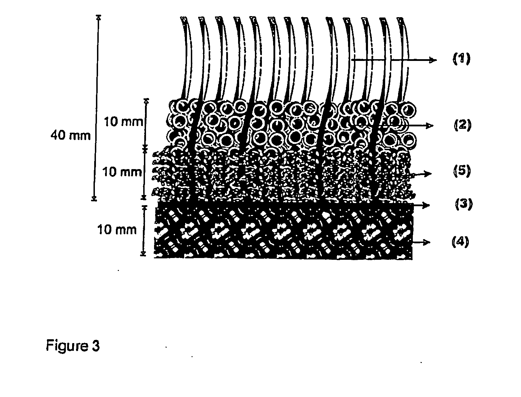

A artificial turf structure is prepared comprising a concrete flooring, a 10 mm e-layer of foamed cross linked polyolefin material or foamed polyurethane material, a carpet backing (Prestige XM40, having monofilament fibers of 40 mm length), (15 kg/m$^2$) infill sand layer (to stabilise the turf structure) and 10 mm granules A, B or C. See figure 3
The shock absorption in this system is a result from the combination of an e-layer and the infill layer. The following tests were performed;

- Force reduction (requirements FIFA* : 55-70% ; FIFA** : 60-70%)
- Energy restitution (requirements FIFA: no requirement yet. KNVB : 20-50%)
- Vertical deformation (requirements FIFA* : 4-9 mm ; FIFA** : 4-8 mm)
- Rotational friction (requirements FIFA* : 25-50 Nm ; FIFA** : 30-45 Nm)

Results are given in table 4.

Table 4; properties of an artificial turf structure having an e-layer, sand and 10 mm infill granules.

|  | A | A-F | A-H | B-H | C-H |
|---|---|---|---|---|---|
| Force reduction (%) | 62 | 61 | 66 | 66 | 66 |
| Energy restitution (%) | 42 | 44 | 38 | 46 | 42 |
| Vertical deformation (mm) | 6.3 | 6.6 | 7.6 | 8.0 | 8.7 |
| Rotational Friction (Nm) | 42 | 42 | 35 | 37 | 31 |

The rotational friction is rather high for granules A (solid) and A-F (foam). Therefore it is a great advantage to see that the rotational friction is significant lower with hollow granules at the same infill layer thickness.

Example 4

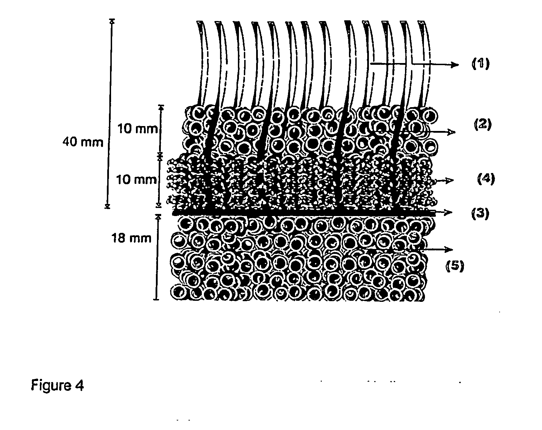

Example 4 shows the beneficial effects of applying the granules according to the invention as an e-layer. An e-layer has been prepared by mixing 18 weight units of granules A-H or C-H with 1 weight unit of a polyurethane binder system (e.g. DOW Voramer™ MR™ 1165, BASF Lupranate® 223 or Qualipur 3939) to form it into an e-layer having a thickness of 12 or 18 mm. The mixing, and installing and (moisture) curing of the system is seen as a state of the art. As a comparison a commercial 20 mm thick e-layer is used made from recycled tire granules (hereafter: SBR) also bound with a polyurethane binder system. See figure 4.
Tests were performed on an artificial turf structure comprising a concrete flooring, an e-layer (12 or 18 mm thick)a Prestige XM 40 carpet, 10 mm sand (15/kg/m2) and 10 mm granule A (solid).
Force reduction (%) (FIFA*: 55-70% ; FIFA** : 60-70%)

Table 5 force reduction of a system having an e-layer from hollow granules

|  | SBR 20 mm | C-H 12 mm | C-H 18 mm | A-H 12 mm | A-H 18 mm |
|---|---|---|---|---|---|
| 1st hit | 63 | 67 | 71 | 66 | 70 |
| 2nd hit | 61 | 64 | 70 | 63 | 68 |
| 3rd hit | 60 | 63 | 69 | 63 | 67 |
| **Final value (average 2nd & 3 hit)** | **61** | **64** | **70** | **63** | **68** |

The performance of the artificial turf structure with the hollow granules used as an e-layer (both the A-H and C-H) is better values for the shock absorption compared to standard 20 mm SBR e-layers, in this case with even thinner layers. A further advantage of the hollow granules e-layers is the stability of the e-layer after subsequent hits.
Energy restitution (%) (FIFA: no requirement yet. KNVB : 20-50%)

Table 6; energy restitution values of a turf structure comprising an e-layer from hollow granules.

|  | SBR 20 mm | C-H 12 mm | C-H 18 mm | A-H 12 mm | A-H 18 mm |
|---|---|---|---|---|---|
| 1st hit | 39 | 29 | 30 | 28 | 29 |
| 2nd hit | 47 | 32 | 33 | 34 | 33 |
| 3rd hit | 47 | 35 | 33 | 34 | 33 |
| **Final value (average 2nd & 3rd hit)** | **47** | **34** | **33** | **34** | **33** |

Currently the energy restitution is only a requirement in The Netherlands. It is expected that the FIFA will include this characteristic with the same requirements.

**Claims**

1.  Artificial turf structure comprising a backing sheet with an upper surface provided with fibres of a selected length, the fibres extending upwardly from the upper surface and an infill layer of polymer granules disposed between the fibres, **characterized in that** the polymer granules have a tubular shape having one or more hollow channels, wherein each hollow channel occupies at least 10% of the total volume of a polymer granule, the polymer granules forming a loose infill layer in the artificial turf structure.

2.  The artificial turf structure according to claim 1, wherein the polymer granules comprise a hollow volume in % of the total volume per granule of at least 20%.

3.  The artificial turf structure according to claim 1, wherein the polymer granules comprise a hollow volume between 40 and 85% relative to the total volume of a granule.

4.  The artificial turf structure according to anyone of claims 1-3, wherein the polymer granules have a wall thickness of at least 200 $\mu$m.

5.  The artificial turf structure according to anyone of claims 1-4, wherein the polymer granules have a wall thickness of at least 300 $\mu$m.

6.  The artificial turf structure according to anyone of claims 1-5, wherein the polymer granules have an outer diameter (d1) between 1 and 10 mm.

7.  The artificial turf structure according to anyone of claims 1-6, wherein the polymer granules have an outer diameter (d1) between 2 and 4 mm.

8.  The artificial turf structure according to anyone of claims 1-7, wherein the polymer granules have an inner diameter (d2) of at least 0.5 mm.

9.  The artificial turf structure according to anyone of claims 1-8, wherein the polymer granules have a ratio of the length (L) of the granule over the outer diameter (d1) of at least 0.7.

10. The artificial turf structure according to anyone of claims 1-9, wherein the polymer granules have a ratio between the inner diameter (d2) and outer diameter (d1) between 0.1-0.9.

11. The artificial turf structure according to anyone of claims 1-10, wherein the polymer granules have a ratio between the inner diameter (d2) and outer diameter (d1) between 0.20-0.8.

12. The artificial turf structure according to anyone of claims 1-11, wherein the polymer granules have a ratio between the inner diameter (d2) and outer diameter (d1) between 0.35-0.75.

13. The artificial turf structure according to anyone of claims 1-12, wherein the polymer granules have a cylindrical shape.

14. The artificial turf structure according to anyone of claims 1-13, wherein the polymer is chosen from a plastomer, a thermoplastic elastomer or mixtures thereof.

15. The artificial turf structure according to anyone of claims 1-14, wherein the polymer compound that is used to make the polymer granule has a shore A hardness between 20-93 and a compression set <55% measured via ISO 815, at 20C/72h.

16. The artificial turf structure according to claim 14, wherein the thermoplastic elastomer is chosen from vinyl based polymers, polyurethanes, polyetheresters or polymers comprising a thermoplastic and an elastomer.

17. The artificial turf structure according to claim 16 wherein the vinyl based polymers are chosen from SBS, SEBS, or mixtures thereof.

18. The artificial turf structure according to anyone of claims 1-17, wherein the polymer granules comprise a dynamically vulcanized thermoplastic elastomer.

19. The artificial turf structure according to anyone of claims 1-18, wherein the turf structure has a shock absorption index above 6.

20. The artificial turf structure according to anyone of claims 1-19, wherein the turf structure has a shock absorption index between 6 and 100.

21. The artificial turf structure according to anyone of claims 1-20, wherein the turf structure has a shock absorption index between 8 and 50.

**Patentansprüche**

1. Kunstrasenstruktur, umfassend: eine Trägerschicht mit einer oberen Oberfläche, die mit Fasern einer gewählten Länge ausgestattet ist, wobei die Fasern sich von der oberen Oberfläche aufwärts erstrecken, und eine Füllschicht aus Polymerkörnchen, die zwischen den Fasern angeordnet sind, **dadurch gekennzeichnet, dass** die Polymerkörnchen eine Röhrenform mit einem oder mehreren hohlen Kanälen haben, wobei jeder hohle Kanal mindestens 10% des Gesamtvolumens eines Polymerkörnchens einnimmt und die Polymerkörnchen eine lose Füllschicht in der Kunstrasenstruktur bilden.

2. Die Kunstrasenstruktur gemäß Anspruch 1, worin die Polymerkörnchen ein Hohlvolumen in % des Gesamtvolumens pro Körnchen von mindestens 20% umfassen.

3. Die Kunstrasenstruktur gemäß Anspruch 1, worin die Polymerkörnchen ein Hohlvolumen zwischen 40 und 85% im Verhältnis zum Gesamtvolumen eines Körnchens umfassen.

4. Die Kunstrasenstruktur gemäß einem beliebigen der Ansprüche 1-3, worin die Polymerkörnchen eine Wanddicke von mindestens $200\mu$m haben.

5. Die Kunstrasenstruktur gemäß einem beliebigen der Ansprüche 1-4, worin die Polymerkörnchen eine Wanddicke von mindestens $300\mu$m haben.

6. Die Kunstrasenstruktur gemäß einem beliebigen der Ansprüche 1-5, worin die Polymerkörnchen einen Außendurchmesser (d1) zwischen 1 und 10 mm haben.

7. Die Kunstrasenstruktur gemäß einem beliebigen der Ansprüche 1-6, worin die Polymerkörnchen einen Außendurchmesser (d1) zwischen 2 und 4 mm haben.

8. Die Kunstrasenstruktur gemäß einem beliebigen der Ansprüche 1-7, worin die Polymerkörnchen einen Innendurchmesser (d2) von mindestens 0,5 mm haben.

9. Die Kunstrasenstruktur gemäß einem beliebigen der Ansprüche 1-8, worin die Polymerkörnchen ein Verhältnis zwischen Länge (L) des Körnchens und Außendurchmesser (d1) von mindestens 0,7 haben.

10. Die Kunstrasenstruktur gemäß einem beliebigen der Ansprüche 1-9, worin die Polymerkörnchen ein Verhältnis zwischen Innendurchmesser (d2) und Außendurchmesser (d1) zwischen 0,1-0,9 haben.

11. Die Kunstrasenstruktur gemäß einem beliebigen der Ansprüche 1-10, worin die Polymerkörnchen ein Verhältnis zwischen Innendurchmesser (d2) und Außendurchmesser (d1) zwischen 0,20-0,8 haben.

12. Die Kunstrasenstruktur gemäß einem beliebigen der Ansprüche 1-11, worin die Polymerkörnchen ein Verhältnis zwischen Innendurchmesser (d2) und Außendurchmesser (d1) zwischen 0,35-0,75 haben.

13. Die Kunstrasenstruktur gemäß einem beliebigen der Ansprüche 1-12, worin die Polymerkörnchen eine zylindrische Form haben.

14. Die Kunstrasenstruktur gemäß einem beliebigen der Ansprüche 1-13, worin das Polymer gewählt ist aus einem Plastomer, einem thermoplastischen Elastomer oder Mischungen davon.

**15.** Die Kunstrasenstruktur gemäß einem beliebigen der Ansprüche 1-14, worin die Polymerverbindung, die verwendet wird, um das Polymerkörnchen herzustellen, eine Shore A-Härte zwischen 20-93 und einen Druckverformungsrest <55%, gemessen nach ISO 815 bei 20C/72h, haben.

**16.** Die Kunstrasenstruktur gemäß Anspruch 14, worin das thermoplastische Elastomer gewählt ist aus vinylbasierten Polymeren, Polyurethanen, Polyetherestern oder Polymeren, die ein Thermoplast und ein Elastomer umfassen.

**17.** Die Kunstrasenstruktur gemäß Anspruch 16, worin die vinylbasierten Polymere gewählt sind aus SBS, SEBS oder Mischungen davon.

**18.** Die Kunstrasenstruktur gemäß einem beliebigen der Ansprüche 1-17, worin die Polymerkörnchen ein dynamisch vulkanisiertes thermoplastisches Elastomer umfassen.

**19.** Die Kunstrasenstruktur gemäß einem beliebigen der Ansprüche 1-18, worin die Rasenstruktur einen Stoßdämpfungsindex über 6 hat.

**20.** Die Kunstrasenstruktur gemäß einem beliebigen der Ansprüche 1-19, worin die Rasenstruktur einen Stoßdämpfungsindex zwischen 6 und 100 hat.

**21.** Die Kunstrasenstruktur gemäß einem beliebigen der Ansprüche 1-20, worin die Rasenstruktur einen Stoßdämpfungsindex zwischen 8 und 50 hat.

**Revendications**

**1.** Structure de gazon artificiel, comportant une feuille de support à surface supérieure pourvue de fibres d'une certaine longueur, les fibres s'étendant vers le haut depuis la surface supérieure, et une couche de garnissage faite de granulés de polymère disposés entre les fibres, **caractérisée en ce que** les granulés de polymère ont une forme tubulaire dotée d'un ou de plusieurs canaux creux, chaque canal creux occupant au moins 10 % du volume total d'un granulé de polymère, les granulés de polymère formant une couche de garnissage lâche dans la structure de gazon artificiel.

**2.** Structure de gazon artificiel selon la revendication 1, dans laquelle les granulés de polymère ont un pourcentage de volume creux d'au moins 20 % du volume total par granulé.

**3.** Structure de gazon artificiel selon la revendication 1, dans laquelle les granulés de polymère ont un pourcentage de volume creux de 40 à 85 % par rapport au volume total d'un granulé.

**4.** Structure de gazon artificiel selon l'une quelconque des revendications 1 à 3, dans laquelle les granulés de polymère ont une épaisseur de paroi d'au moins 200 $\mu$m.

**5.** Structure de gazon artificiel selon l'une quelconque des revendications 1 à 4, dans laquelle les granulés de polymère ont une épaisseur de paroi d'au moins 300 $\mu$m.

**6.** Structure de gazon artificiel selon l'une quelconque des revendications 1 à 5, dans laquelle les granulés de polymère ont un diamètre extérieur (d1) de 1 à 10 mm.

**7.** Structure de gazon artificiel selon l'une quelconque des revendications 1 à 6, dans laquelle les granulés de polymère ont un diamètre extérieur (d1) de 2 à 4 mm.

**8.** Structure de gazon artificiel selon l'une quelconque des revendications 1 à 7, dans laquelle les granulés de polymère ont un diamètre intérieur (d2) d'au moins 0,5 mm.

**9.** Structure de gazon artificiel selon l'une quelconque des revendications 1 à 8, dans laquelle les granulés de polymère ont un rapport de la longueur (L) du granulé au diamètre extérieur (d1) d'au moins 0,7.

**10.** Structure de gazon artificiel selon l'une quelconque des revendications 1 à 9, dans laquelle les granulés de polymère ont un rapport de 0,1 à 0,9 entre le diamètre intérieur (d2) et le diamètre extérieur (d1).

**11.** Structure de gazon artificiel selon l'une quelconque des revendications 1 à 10, dans laquelle les granulés de polymère ont un rapport de 0,2 à 0,8 entre le diamètre intérieur (d2) et le diamètre extérieur (d1).

**12.** Structure de gazon artificiel selon l'une quelconque des revendications 1 à 11, dans laquelle les granulés de polymère ont un rapport de 0,35 à 0,75 entre le diamètre intérieur (d2) et le diamètre extérieur (d1).

**13.** Structure de gazon artificiel selon l'une quelconque des revendications 1 à 12, dans laquelle les granulés de polymère ont une forme cylindrique.

**14.** Structure de gazon artificiel selon l'une quelconque des revendications 1 à 13, dans laquelle le polymère est choisi parmi un plastomère, un élastomère thermoplastique ou des mélanges de ceux-ci.

**15.** Structure de gazon artificiel selon l'une quelconque des revendications 1 à 14, dans laquelle le composé polymère servant à fabriquer les granulés de polymère a une dureté Shore A de 20 à 93 et une compression rémanente < 55 % mesurée pendant 72 h à 20°C conformément à ISO 815.

**16.** Structure de gazon artificiel selon la revendication 14, dans laquelle l'élastomère thermoplastique est choisi parmi des polymères à base de vinyle, des polyuréthanes, des polyétheresters ou des polymères comprenant une résine thermoplastique et un élastomère.

**17.** Structure de gazon artificiel selon la revendication 16, dans laquelle les polymères à base de vinyle sont choisis parmi le SBS, le SEBS ou des mélanges de ceux-ci.

**18.** Structure de gazon artificiel selon l'une quelconque des revendications 1 à 17, dans laquelle les granulés de polymère comprennent un élastomère thermoplastique à vulcanisation dynamique.

**19.** Structure de gazon artificiel selon l'une quelconque des revendications 1 à 18, la structure de gazon ayant un indice d'amortissement des chocs supérieur à 6.

**20.** Structure de gazon artificiel selon l'une quelconque des revendications 1 à 19, la structure de gazon ayant un indice d'amortissement des chocs de 6 à 100.

**21.** Structure de gazon artificiel selon l'une quelconque des revendications 1 à 20, la structure de gazon ayant un indice d'amortissement des chocs de 8 à 50.

Figure 1

40 mm

20 mm

(1)

(2)

(3)

Figure 2

40 mm

10 mm → (1)

10 mm → (2)

10 mm → (5)

→ (3)

→ (4)

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006092337 A

- US 20020064628 A1


**Non-patent literature cited in the description**

- FIFA in the FIFA Quality concept for football turf. Handbook of requirements. January 2008
- FIFA Quality concept for football turf. January 2008

- FIFA Test method: Simulated Mechanical Abrasion During Use. FIFA test method 9. January 2008, 37
- FIFA test method 9. January 2008, 37